# EUROPEAN PATENT SPECIFICATION

(11) **EP 4 358 265 B1**
(45) Date of publication and mention of the grant of the patent: **14.01.2026**
(21) Application number: 23831939.6
(22) Date of filing: 29.06.2023
(51) Int. Cl.: H01M 50/204, H01M 50/271, H01M 50/209, H01M 50/289, H01M 50/30, H01M 50/342, H01M 50/383, H01M 50/249, H01M 50/211, H01M 50/24, H01M 50/367, H01M 50/358, H01M 50/317

(54) **BATTERY MODULE, BATTERY PACK AND VEHICLE INCLUDING THE SAME**
BATTERIEMODUL, BATTERIEPACK UND FAHRZEUG DAMIT
MODULE DE BATTERIE, BLOC-BATTERIE ET VÉHICULE LES COMPRENANT

(30) Priority: 01.07.2022 KR 20220081164
(43) Date of publication of application: 24.04.2024
(73) Proprietor: LG Energy Solution, Ltd., Seoul 07335 (KR)
(72) Inventor: JANG, Sung-Hwan, Daejeon 34122 (KR); PARK, Myung-Ki, Daejeon 34122 (KR); SEONG, Jun-Yeob, Daejeon 34122 (KR)
(74) Representative: Plasseraud IP
(86) International application number: PCT/KR2023/009179
(87) International publication number: WO 2024/005581

(56) References cited:
- WO-A1-2021/221351
- WO-A1-2022/006901
- WO-A1-2022/119186
- KR-A- 20200 040 026
- KR-A- 20210 090 938
- KR-A- 20220 037 348
- KR-A- 20220 049 262
- US-A1- 2021 359 374
- US-A1- 2022 181 731

## Description

### TECHNICAL FIELD

The present application claims priority to Korean Patent Application No. 10-2022-0081164 filed on July 1, 2022 in the Republic of Korea.

The present disclosure relates to a battery module, and a battery pack and a vehicle comprising the same, and more particularly, to a battery module configured to ensure structural stability in case of a thermal event, and a battery pack and a vehicle comprising the same.

### BACKGROUND ART

Recently, with the rapid increase in demand for portable electronic products such as laptop computers, video cameras and mobile phones and ever-increasing development of electric vehicles, accumulators for energy storage, robots and satellites, many studies are being conducted on high performance secondary batteries that can be repeatedly recharged.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based batteries, and thus have advantages of free charge/discharge, very low self-discharge rate, and high energy density.

The lithium secondary batteries mainly use a lithium-based oxide and a carbon material as a positive electrode active material and a negative electrode active material, respectively. In addition, the lithium secondary batteries include an electrode assembly including a positive electrode plate and a negative electrode plate respectively coated with the positive electrode active material and the negative electrode active material and a separator interposed between the positive electrode plate and the negative electrode plate, and a hermetically sealed packaging or battery case in which the electrode assembly is received together with an electrolyte solution.

Meanwhile, according to the shape of the battery case, lithium secondary batteries may be classified into can-type secondary batteries in which the electrode assembly is included in a metal can and pouch-type secondary batteries in which the electrode assembly is included in a pouch made of an aluminum laminate sheet. The can-type secondary batteries may be sub-classified into cylindrical batteries and prismatic batteries according to the shape of the metal can.

Here, the pouch of the pouch-type secondary batteries may be largely divided into a lower sheet and an upper sheet that covers the lower sheet. In this instance, the pouch accommodates the electrode assembly including the positive electrode, the negative electrode and the separator stacked and wound together. Additionally, after the electrode assembly is received, the edge of the upper sheet and the lower sheet is sealed by heat welding. Additionally, an electrode tab drawn from each electrode may be coupled to an electrode lead, and an insulation film may be added to the electrode lead at an area of contact with the sealing portion.

The pouch-type secondary batteries may be so flexible that they may be constructed in various shapes. Additionally, the pouch-type secondary batteries may realize secondary batteries of the same capacity with smaller volume and mass.

The lithium secondary batteries are used to construct a battery module or a battery pack by stacking a plurality of battery cells themselves or in a cartridge to form a densely packed structure and electrically connecting them to provide high voltage and high current.

In the battery pack configuration, typically, one of the important issues is safety. In particular, when a thermal event occurs in any of the battery modules included in the battery pack, it is necessary to suppress the propagation of the event to the other battery module. Unless thermal propagation between the battery modules is properly suppressed, the thermal event may spread to the other battery module included in the battery pack, causing a greater problem such as a fire or explosion in the battery pack. Moreover, the fire or explosion in the battery pack may cause human and economic loss and damage. Accordingly, the battery pack needs a configuration for properly controlling the thermal event.

In the prior art, document WO 2021/221351 A1 describes a battery pack comprising battery modules with a front side with electrodes and a rear side with a venting gate that communicates with the inside of the battery module and can release flames or heat that may occur inside. Venting gates of the battery modules are arranged to face the outside of the battery pack. Such venting gates are passages of reduced size with respect to the battery modules.

### DISCLOSURE

### Technical Problem

The present disclosure is designed to solve the above-described problem, and therefore the present disclosure is directed to providing a battery module configured to ensure structural stability in case of a thermal event, and a battery pack and a vehicle comprising the same.

However, the technical problem to be solved by the present disclosure is not limited to the above-mentioned problems, and other problems not mentioned will be clearly understood by those skilled in the art from the description below.

### Technical Solution

To accomplish the above object battery pack according to the appended claim 1 , a battery module according to the appended claim 13 and a vehicle according to the appended claim 12 are provided.

In an embodiment, the pack housing may include a side frame that constitutes a side of the pack housing so that at least a part of the side frame is disposed to face the rear side of the battery module.

In an embodiment, the pack housing may further include a first cover configured to face the opening/closing member in upper and lower directions and arranged to face the side frame, and a passage hole through which the venting gas or flame passes may be formed between the side frame and the first cover.

In an embodiment, an end of the opening/closing member may be configured to contact the first cover when thermal runaway occurs in the battery module.

In an embodiment, the pack housing may further include a second cover spaced apart from the first cover in the upper and lower directions and placed above the first cover, and a flow path communicating with the passage hole and configured to guide the discharge of the venting gas or flame to the outside of the pack housing may be formed between the first cover and the second cover.

In an embodiment, the pack housing may further include a discharge hole communicating with the flow path and configured to discharge the venting gas or flame to the outside of the pack housing.

In an embodiment, the discharge hole may be located in the pack housing at a position after the venting gas or flame has been bent one or more times.

In an embodiment, the discharge hole may be located at a side of the pack housing opposite to a portion where the battery module is placed based on the first cover.

In an embodiment, the discharge hole may be provided at a side of the pack housing opposite to the front side of the battery module based on the first cover.

In an embodiment, the pack housing may further include a reinforcing wall connected to the side frame, the battery module may be provided as a pair based on the reinforcing wall, and the pair of battery modules may be arranged so that the front sides of the battery modules face each other within the pack housing.

In an embodiment, the pack housing may further include a barrier connected to the side frame, the battery module may be provided in plurality along a longitudinal direction of the pack housing, and the plurality of battery modules may be configured to be sealed to each other by the barrier when viewed in the longitudinal direction of the pack housing.

In addition, a battery module according to still another aspect of the present disclosure comprises a cell assembly; and a module case accommodating the cell assembly therein, configured to prevent venting gas or flame from being discharged to a front side where a module terminal is placed, and having an opening/closing member configured to discharge the venting gas or flame to the outside at a rear side.

In an embodiment, the module case may be configured to be opened in an upper part at the rear side, and the opening/closing member may be configured to open and close the upper part of the module case at the rear side according to the discharge pressure of the venting gas or the flame.

In an embodiment, the opening/closing member may include blocking plates formed at both side ends, and the blocking plate may be configured to block the flow of the venting gas or the flame toward a side of the module case when the opening/closing member opens the upper part of the module case at the rear side.

### Advantageous Effects

According to an embodiment of the present disclosure, by configuring an opening/closing member that induces the discharge of venting gas and/or flame in one direction, the discharge of venting gas and/or flame in the direction in which the module terminal is placed in the battery module can be minimized.

Accordingly, it is possible to prevent thermal runaway or flame from propagating between battery cells within one battery module.

Additionally, simultaneous ignition between a plurality of battery modules can be prevented by minimizing the discharge of venting gas and/or flame toward the module terminal.

Additionally, damage to the electrical connection member connecting the module terminals between the plurality of battery modules can be prevented, thereby preventing short circuits between battery modules and ensuring electrical stability.

Additionally, after the venting gas and/or flame is discharged, additional ignition within the battery module can be suppressed by blocking the reverse inflow of the venting gas and/or flame.

Additionally, in the normal state of the battery module, the cell assembly can be stably protected by closing the open portion of the module case.

Additionally, ignition factors of the battery pack can be suppressed and the structural stability of the battery pack can be strengthened.

In addition, various additional effects may be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a drawing to explain the detailed structure of the battery pack of FIG. 1.
FIG. 3 is a diagram showing a battery module provided in the battery pack of FIG. 2.
FIGS. 4 and 5 are diagrams showing the state of the battery module of FIG. 3 during thermal runaway.
FIG. 6 is a diagram showing a battery module according to another embodiment of the present disclosure.
FIG. 7 is a cross-sectional view taken in the direction A-A' of FIG. 1.
FIGS. 8 and 9 are diagrams showing an example of venting gas or flame being discharged during thermal runaway of the battery module.
FIG. 10 is a diagram showing another example of venting gas or flame being emitted during thermal runaway of the battery module.

### BEST MODE

Hereinafter, preferred embodiments of the present disclosure will be described in detail with reference to the accompanying drawings.

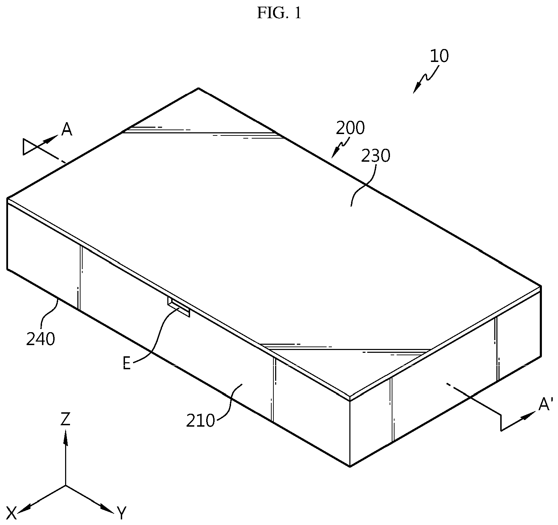

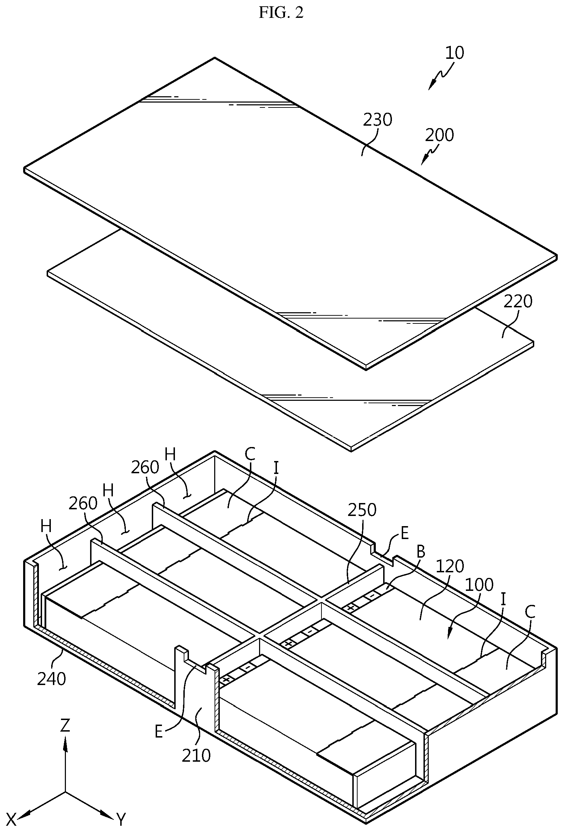

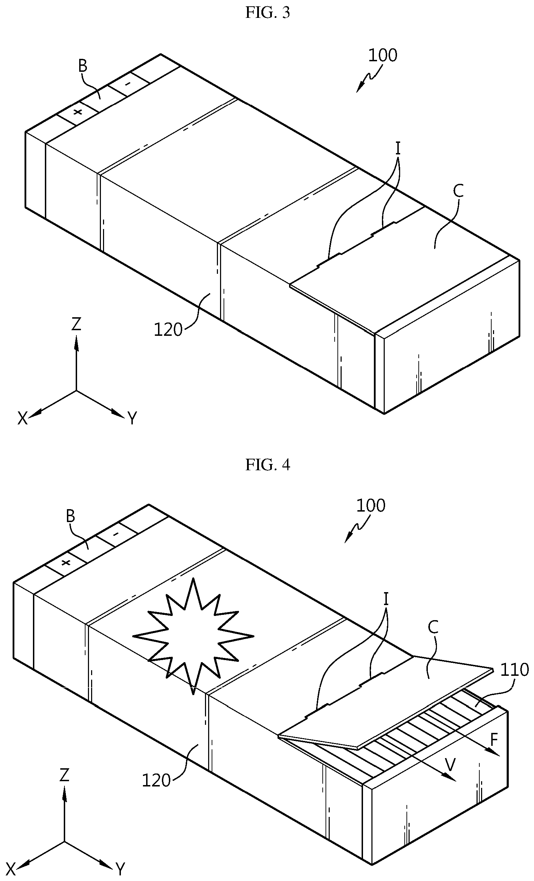

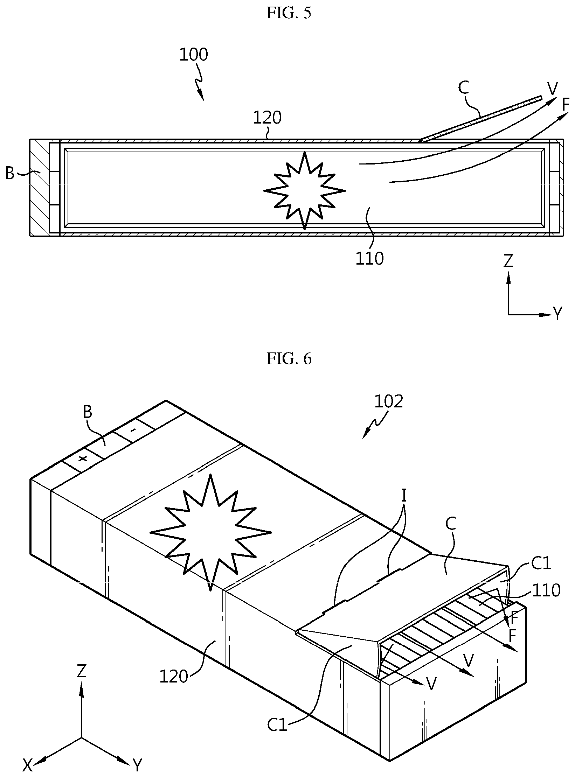

FIG. 1 is a diagram showing a battery pack 10 according to an embodiment of the present disclosure, FIG. 2 is a drawing to explain the detailed structure of the battery pack 10 of FIG. 1, FIG. 3 is a diagram showing a battery module 100 provided in the battery pack 10 of FIG. 2, and FIGS. 4 and 5 are diagrams showing the state of the battery module 100 of FIG. 3 during thermal runaway. At this time, the venting gas and flame, which will be described later in FIGS. 4 and 5, will be denoted by reference symbols 'V' and 'F', respectively.

In the embodiment of the present disclosure, the X-axis direction shown in the drawing can mean the longitudinal direction of the pack housing 200, which will be described later, the Y-axis direction can mean the left and right directions of the pack housing 200 perpendicular to the X-axis direction and the horizontal plane (XY plane), and the Z-axis direction can mean upper and lower directions perpendicular to both the X-axis direction and the Y-axis direction.

Referring to FIGS. 1 to 5, the battery pack 10 according to the invention includes a battery module 100 and a pack housing 200.

The battery module 100 may include a cell assembly 110 and a module case 120.

The cell assembly 110 may include at least one battery cell. Here, the battery cell may mean a secondary battery. The battery cell may be provided as a pouch-type battery cell, a cylindrical battery cell, or a prismatic battery cell. As an example, the battery cell may be a pouch-type battery cell.

The module case 120 may accommodate the cell assembly 110 therein. To this end, the module case 120 may have an internal accommodation space to accommodate the cell assembly 110 therein. This module case 120 may include a material with strong heat resistance and rigidity. In addition, the battery module 100 may further include a module terminal B provided at the front side of the module case 120 and connected to the cell assembly 110. As an example, the module terminal B may have a positive electrode module terminal and a negative electrode module terminal. This module terminal B may be electrically connected to electronic control components such as a separate BMS (Battery Management System), a current sensor, and a fuse provided in the battery pack 10.

The pack housing 200 accommodates the battery module 100 therein. To this end, the pack housing 200 may include an internal accommodating space for accommodating the battery module 100 therein. Additionally, the pack housing 200 may include a material with strong heat resistance and rigidity.

Specifically, as shown in FIGS. 3 to 5, the module case 120 is configured so that venting gas and/or flame is not discharged to the front side where module terminal B is placed. Additionally, module case 120 may include an opening/closing member C.

The opening/closing member C is provided at the rear side of the module case 120. Additionally, the opening/closing member C may be configured to discharge venting gas and/or flame to the outside.

In a typical battery pack, events such as thermal runaway may occur in certain battery modules. In this case, high-temperature and high-pressure venting gas may be generated inside a specific battery module, and when this venting gas meets oxygen, a flame may be generated inside or outside the battery module.

Meanwhile, since the conventional battery module is configured with a structure in which the cell assembly is placed within a sealed module case, there is no appropriate discharge path for venting gas or flame, so the possibility of collapse and explosion of the module case structure is very high. In this case, there is a risk of greater damage as the venting gas or flame may be discharged toward the module terminal provided in the battery module.

In addition, there is a high risk that the flame generated in the battery module is transferred to other battery modules adjacent to a specific battery module, and as a result, simultaneous ignition of a plurality of battery modules may occur. Meanwhile, in the conventional battery pack, a plurality of battery modules are arranged within the sealed pack housing and there is no appropriate discharge path for venting gas or flame, so it is vulnerable to the aforementioned simultaneous ignition.

In the case of the battery module 100 of the present disclosure, the above-mentioned problem may be solved by providing the opening/closing member C. This opening/closing member C is configured to open and close the rear side of the module case 120 according to a change in the internal pressure of the module case 120.

According to this embodiment of the present disclosure, by configuring the opening/closing member C that induces the discharge of venting gas and/or flame in one direction, the discharge of venting gas and/or flame from the battery module 100 in the direction in which the module terminal B is disposed may be minimized.

Through this venting structure, it is possible to prevent thermal runaway or flame from propagating between battery cells within one battery module 100. In addition, when a thermal runaway phenomenon occurs, an explosion of the battery module 100 may be prevented by lowering the internal pressure of the battery module 100 through appropriate gas discharge. In addition, simultaneous ignition among the plurality of battery modules 100 may be prevented by minimizing the discharge of venting gas and/or flame toward the module terminal B. In addition, damage to the electrical connection member (e.g., module bus bar) connecting the module terminals B between the plurality of battery modules 100 may be prevented, thereby preventing short circuits between the battery modules 100 and ensuring electrical stability.

In summary, according to the above-described embodiment of the present disclosure, ignition factors of the battery pack 10 may be suppressed and structural stability of the battery pack 10 may be strengthened.

Referring again to FIGS. 3 to 5, the module case 120 may be configured to be opened in an upper part at the rear side.

Additionally, the opening/closing member C may be configured to open and close the upper rear side of the module case 120 according to the discharge pressure of the venting gas and/or flame.

That is, the opening/closing member C may be configured to open and close the upper part at the rear side of the module case 120 when the internal pressure of the module case 120 changes depending on the discharge pressure of the venting gas and/or flame.

Specifically, the opening/closing member C may be rotatably coupled to one side of the opened upper part at the rear side of the module case 120. As an example, the opening/closing member C may be rotatably coupled to one side of the upper part at the rear side of the module case 120 through a separate coupling member I. As an example, the coupling member I may be a hinge, but is not limited thereto.

Although not shown in detail, the coupling member I may include an elastic body to control the rotational movement of the opening/closing member C described above. As an example, the elastic body may be a hinge spring.

The opening/closing member C may close the upper part at the rear side of the module case 120 by the elastic restoring force of the elastic body provided in the above-described coupling member I in a state in which thermal runaway of the battery module 100 does not occur.

Meanwhile, the opening/closing member C may be configured to open the upper part at the rear side of the module case 120 when the internal pressure of the module case 120 increases to a criterion pressure or above due to thermal runaway of the battery module 100. In this case, the pressing force applied to the opening/closing member C may be higher than the elastic restoring force of the elastic body due to the discharge pressure of the venting gas and/or flame. Therefore, when thermal runaway occurs in the battery module 100, the opening/closing member C may be deployed toward the outside of the module case 120 by the discharge pressure of the venting gas and/or flame.

Accordingly, the venting gas and/or flame may be quickly discharged to the outside of the module case 120 through the opened upper part at the rear side of the module case 120. In addition, the internal pressure of the module case 120 may quickly decrease as the venting gas and/or flame is discharged.

In addition, the opening/closing member C may be configured to close the upper part at the rear side of the module case 120 when the venting gas and/or flame is discharged to the outside of the module case 120 and the internal pressure of the module case 120 falls below the reference pressure. In this way, the case where the internal pressure of the module case 120 is equal to or lower than the criterion pressure may mean the case where the venting gas and/or flame is discharged to the outside of the module case 120 so that the elastic restoring force of the elastic body is greater than the pressing force applied to the opening/closing member C according to the internal pressure of the module case 120. In this case, the elastic body may be restored to its initial state. Therefore, when the venting gas and/or flame is discharged to the outside and the internal pressure of the module case 120 decreases, the opening/closing member C may close the upper part at the rear side of the module case 120.

Accordingly, when the discharge amount of the venting gas and/or flame is reduced, the module case 120 may be more easily closed by the opening/closing member C, thereby reliably blocking the reverse inflow of the venting gas and/or flame into the inside of the module case 120. Additionally, additional ignition within the module case 120 may be suppressed by blocking the inflow of oxygen into the module case 120.

According to the embodiment of the present disclosure described above, the discharge of venting gas and/or flame from the battery module 100 in the direction in which module terminal B is placed may be minimized, and also after the venting gas and/or flame is discharged, additional ignition within the battery module 100 may be suppressed by blocking the reverse inflow of the venting gas and/or flame.

**In** addition, since one side may be opened and closed according to changes in the internal pressure of the module case 120, the cell assembly 110 may be stably protected by closing the opened portion of the module case 120 in the normal state of the battery module 100.

FIG. 6 is a diagram showing a battery module 102 according to another embodiment of the present disclosure. Additionally, in FIG. 6, the venting gas and flame are denoted by reference symbols 'V' and 'F', respectively.

Since the battery module 102 according to this embodiment is similar to the battery module 100 of the previous embodiment, redundant descriptions of components substantially the same as or similar to those of the previous embodiment will be omitted, and differences from the previous embodiment will be described below.

Referring to FIG. 6, in the battery module 102, the opening/closing member C may include a blocking plate C1.

The blocking plate C1 may be formed at both side ends of the opening/closing member C.

This blocking plate C1 may be configured to block the flow of venting gas and/or flame toward the side of the module case 120 when the opening/closing member C opens the upper part at the rear side of the module case 120.

Specifically, the blocking plate C1 may be configured to extend downward in a bent form from both side ends of the opening/closing member C. This blocking plate C1 may be located within the module case 120 in the normal state of the battery module 102. Meanwhile, the blocking plate C1 may be disposed at both sides of the opening/closing member C as the opening/closing member C opens the upper part at the rear side of the module case 120 when thermal runaway occurs in the battery module 102.

That is, the blocking plate C1 may be placed in the gap between both ends of the opening/closing member C and the module case 120 with the opening/closing member C deployed to the outside of the module case 120. Accordingly, the blocking plate C1 may block the flow of venting gas and/or flame toward the side of the module case 120 when the opening/closing member C opens the upper part at the rear side of the module case 120. Also, when thermal runaway occurs in the battery module 102, the discharge direction of the venting gas and/or flame may be directed to a more specific direction (outward to the rear of the module case 120).

According to the battery module 102 of this embodiment, the flow of venting gas and/or flame toward the side of the module case 120 may be blocked to prevent the transfer of venting gas and/or flame to another battery module 102 adjacent to a specific battery module 102 in the side direction (left and right directions). Accordingly, simultaneous ignition of the plurality of battery modules 102 may be prevented.

Hereinafter, we the detailed structure of the aforementioned battery pack 10 will be described in more detail.

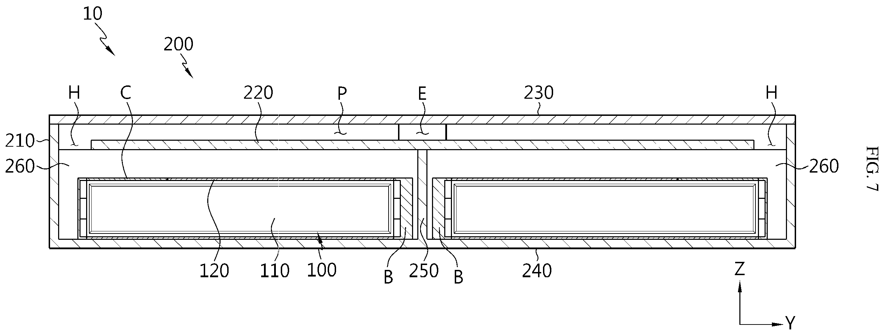

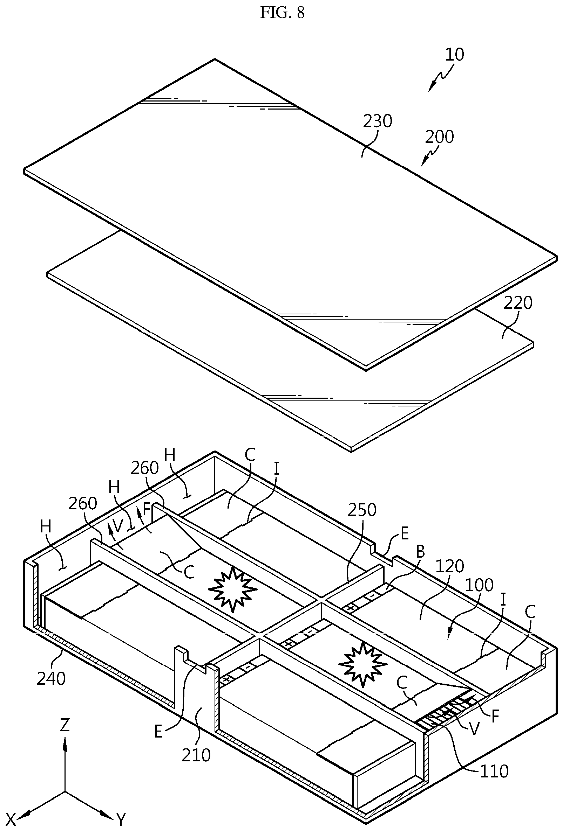

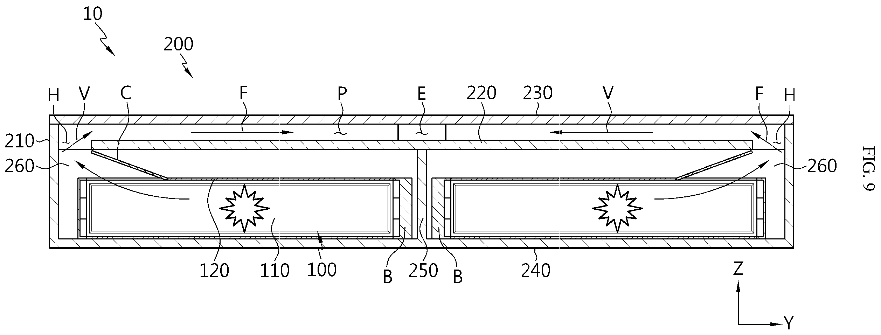

FIG. 7 is a cross-sectional view taken in the direction A-A' of FIG. 1 (in detail, FIG. 7 is a cross-sectional view of the battery pack 10 of FIG. 1 taken in the YZ plane along the line A-A'), and FIGS. 8 and 9 are diagrams showing an example of venting gas or flame being discharged during thermal runaway of the battery module. At this time, in FIGS. 8 and 9, venting gas and flame are denoted by reference symbols 'V' and 'F', respectively.

Referring to FIGS. 1, 2, and 7 to 9, the pack housing 200 may include a side frame 210. However, in FIG. 8, the side frame 210 is shown with a portion removed for convenience of explanation.

The side frame 210 may constitute the side of the pack housing 200. At least a portion of this side frame 210 may be arranged to face the rear side of the battery module 100. At this time, the rear side of the battery module 100 may be arranged to face all sides of the side frame 210, or may be arranged to face only some sides of the side frame 210.

This side frame 210 may provide more direction to the flow of venting gas and/or flame discharged to the outside of the module case 120 through the opening of the opening/closing member C.

Specifically, the side frame 210 may provide a path through which venting gas and/or flame may flow between the pack housing 200 and the rear side of the module case 120. That is, during thermal runaway of the battery module 100, the opening/closing member C may be opened in the direction of the facing side frame 210, so the flow the venting gas and/or flame discharged to the outside of the module case 120 may be guided along a path between the rear side of the battery module 100 and the side of the pack housing 200 and discharged to the outside of the pack housing 200.

With this configuration, the discharge of venting gas and/or flame from the battery module 100 in the direction in which module terminal B is placed may be further minimized.

Referring again to FIGS. 1, 2, and 7 to 9, the pack housing 200 may further include a first cover 220.

The first cover 220 may be configured to face the opening/closing member C in the upper and lower directions and placed to face the side frame 210. That is, the first cover 220 may be placed to face the side of the pack housing 200.

Additionally, a passage hole H through which venting gas and/or flame may pass may be provided between the side frame 210 and the first cover 220. That is, the passage hole H may be provided between the side of the pack housing 200 and the first cover 220. Additionally, the opening/closing member C may be opened so that its end faces the passage hole H when thermal runaway occurs in the battery module 100.

In this way, when thermal runaway occurs in the battery module 100, the end of the opening/closing member C is toward the passage hole H between the side frame 210 and the first cover 220, so the venting gas and/or flame may be discharged rapidly from the area where the battery module 100 is placed in the pack housing 200.

According to this embodiment, the discharge of venting gas and/or flame from the battery module 100 in the direction in which module terminal B is disposed may be further minimized.

Referring again to FIG. 9, the end of the opening/closing member C may be configured to contact the first cover 220 when thermal runaway occurs in the battery module 100. For this purpose, the length of the opening/closing member C (e.g., the length extending from one side of the upper part at the rear side of the opened module case 120) may be equal to or greater than the distance in the upper and lower directions between the first cover 220 and the module case 120.

Accordingly, when thermal runaway occurs in the battery module 100, the opening/closing member C may prevent the venting gas and/or flame from entering the front side (the direction where the module terminal B is placed) of the battery module 100 based on the portion where the end of the opening/closing member C touches the first cover 220 in the space between the first cover 220 and the module case 120.

According to this embodiment, it is possible to prevent the venting gas and/or flame from being discharged from the battery module 100 in the direction in which module terminal B is disposed. In addition, it is possible to prevent the venting gas and/or flame from remaining in the pack housing 200 and more reliably guide the discharge of venting gas and/or flame in the direction of the passage hole H.

Referring again to FIGS. 1, 2, and 7 to 9, the pack housing 200 may further include a second cover 230.

The second cover 230 may be placed on above the first cover 220 and spaced apart from the first cover 220 in the upper and lower directions. This second cover 230 may be coupled to the upper part of the side frame 210.

Additionally, a flow path P may be provided between the first cover 220 and the second cover 230.

The flow path P is in communication with the passage hole H and may be configured to guide the discharge of venting gas or flame to the outside of the pack housing 200.

Additionally, the flow path P may be arranged to be spaced apart from the space where the battery module 100 is placed in the upper and lower directions by the first cover 220. This flow path P may provide a flow space so that the venting gas and/or flame introduced into the flow path P through the passage hole H may be discharged to the outside of the pack housing 200.

With this configuration, the venting gas and/or flame discharged from the rear side of the battery module 100 does not flow randomly inside the pack housing 200, but may be guided by the flow path P and discharged to the outside of the pack housing 200 more stably.

In addition, the venting gas and/or flame discharged through the passage hole H may be discharged to the outside of the pack housing 200 through the flow path P, which is spaced apart from the space where the battery module 100 is placed, so the reverse inflow of the venting gas and/or flame into the space where the battery module 100 is placed may be minimized.

Meanwhile, the above-described pack housing 200 may further include a floor frame 240.

The floor frame 240 constitutes the lower part of the pack housing 200 and may be coupled to the lower part of the side frame 210.

Referring again to FIGS. 1, 2, and 7 to 9, the pack housing 200 may further include a discharge hole E.

The discharge hole E communicates with the flow path P and may be configured to discharge venting gas and/or flame to the outside of the pack housing 200. This discharge hole E may be provided in the shape of a hole having a predetermined area.

Through this configuration, the venting gas and/or flame discharged through the rear side of the battery module 100 may be discharged to the outside of the pack housing 200.

In particular, the discharge hole E may be configured at a position in the pack housing 200 after the venting gas and/or flame has been bent one or more times.

That is, the discharge hole E may be formed in the pack housing 200 at a location after the flow of the venting gas and/or flame discharged from the rear side of the battery module 100 is changed one or more times. As an example, the discharge hole E may be formed in the side (side frame 210) of the pack housing 200 on the flow path P between the first cover 220 and the second cover 230. Additionally, the discharge hole E may be placed adjacent to the passage hole H described above on the flow path P, or may be placed somewhat spaced apart from the passage hole H.

According to this embodiment, since the venting gas and/or flame is discharged to the outside of the pack housing 200 at a location after the flow of the venting gas and/or flame discharged from the rear side of the battery module 100 is changed one or more times, the frame with strong straightness may be slowly discharged to the outside of the pack housing 200, thereby minimizing the frame from acting as an ignition factor. In addition, reverse inflow of the venting gas and/or flame into the space where the battery module 100 is placed may be minimized.

In addition, the discharge hole E may be provided in the side of the pack housing 200 opposite to the portion where the battery module 100 is disposed based on the first cover 220.

As an example, the discharge hole E may be located in the upper part of the first cover 220 on the above-described flow path P and may be arranged to be somewhat spaced apart from the passage hole H.

That is, the discharge hole E may be formed in the pack housing 200 at a location after the flow of the venting gas and/or flame has been changed multiple times. Accordingly, it is possible to minimize the flame, which has a strong straight propagation, from acting as an ignition factor by allowing it to be discharged more slowly to the outside of the pack housing 200. In addition, the reverse inflow of the venting gas and/or flame into the space where the battery module 100 is placed may be further minimized.

In one embodiment, the discharge hole E may be provided at the side of the pack housing 200 opposite to the front side of the battery module 100 based on the first cover 220.

As an example, the formation location of the discharge hole E may be on the side (side frame 210) of the pack housing 200 opposite to the front side of the battery module 100 in the upper and lower directions, based on the first cover 220.

That is, the discharge hole E may be formed in the pack housing 200 to be spaced as much as possible from the rear side of the battery module 100 through which the venting gas and/or flame is discharged. Accordingly, it is possible to minimize the flame, which has a strong straight propagation, from acting as an ignition factor by allowing it to be discharged as slowly as possible to the outside of the pack housing 200. In addition, the reverse inflow of the venting gas and/or flame into the space where the battery module 100 is placed may be suppressed as much as possible.

Referring again to FIGS. 2 and 7 to 9, the pack housing 200 may further include a reinforcing wall 250.

The reinforcing wall 250 may be connected to the side frame 210. For example, both ends (one end and the other end) of the reinforcing wall 250 may be respectively coupled to the side frames 210 arranged in opposite directions. Also, the upper part of the first cover 220 may be coupled with the reinforcing wall 250. Additionally, the floor frame 240 may be placed below the reinforcing wall 250. As an example, the reinforcing wall 250 may be provided at approximately the center of the pack housing 200 when viewed from the left and right directions (Y-axis direction) of the pack housing 200.

Additionally, the battery module 100 may be provided as a pair based on the reinforcing wall 250. This reinforcing wall 250 may partition between the pair of battery modules 100. Additionally, the battery module 100 may be provided as a pair along the left and right directions of the pack housing 200.

Additionally, the pair of battery modules 100 may be arranged within the pack housing 200 so that the front sides of the battery modules 100 face each other. That is, the pair of battery modules 100 may be arranged so that the front sides where the module terminals B are placed face each other, with the reinforcing wall 250 therebetween. At this time, the rear side of the pair of battery modules 100 may be configured to face the side frame 210, respectively.

According to this embodiment, the overall rigidity of the battery pack 10 may be strengthened through reinforcing wall 250.

In addition, the venting gas and/or flame discharged from the rear side of each of the pair of battery modules 100 may be suppressed from being discharged toward each module terminal B. Additionally, simultaneous ignition of the battery modules 100 configured to face each other may be minimized.

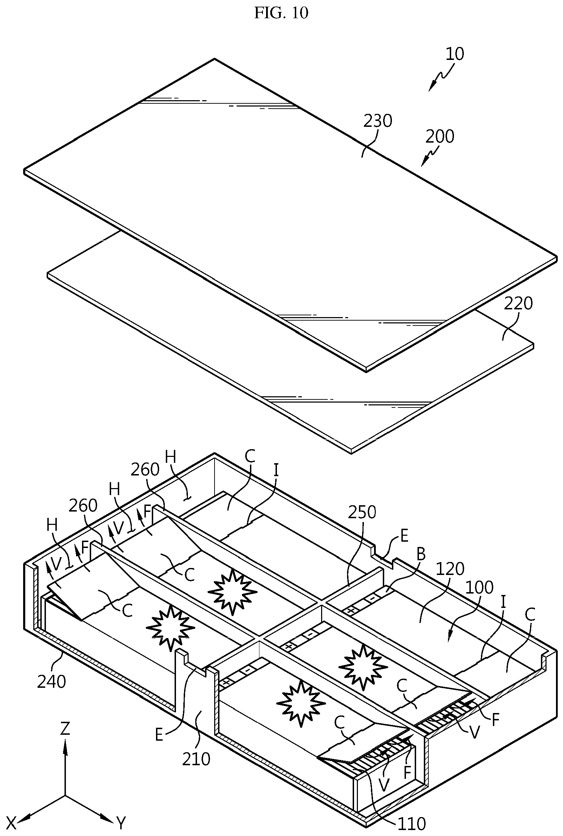

FIG. 10 is a diagram showing another example of venting gas or flame being emitted during thermal runaway of the battery module 100. At this time, in FIG. 10, venting gas and flame are denoted by reference symbols 'V' and 'F', respectively.

Referring to FIGS. 2, 7, and 10, the pack housing 200 may further include a barrier 260.

The barrier 260 may be connected to the side frame 210 at one end. As an example, one end of the barrier 260 may be connected to the side frame 210 in the left and right directions (Y-axis direction) of the pack housing 200. Additionally, the other end of the barrier 260 may be connected to the reinforcing wall 250. As an example, the other end of the barrier 260 may be connected to the side frame 210 in the left and right directions of the pack housing 200. Also, the upper part of the first cover 220 may be coupled to the barrier 260.

The barrier 260 may be provided in plurality along the longitudinal direction of the pack housing 200. At this time, the reinforcing wall 250 may be configured to extend along the longitudinal direction of the pack housing 200 to correspond to the plurality of barriers 260.

Additionally, the battery module 100 may be provided in plurality along the longitudinal direction of the pack housing 200. At this time, the plurality of battery modules 100 may be configured to be sealed to each other by the barrier 260 when viewed from the longitudinal direction of the pack housing 200. At this time, the barrier 260 may include a material with strong heat resistance and rigidity.

Also, the rear side of each of the plurality of battery modules 100 may be configured to face the side frame 210.

With this configuration, it is possible to suppress simultaneous ignition of adjacent battery modules 100 in the longitudinal direction of the pack housing 200.

In addition, when viewed from the longitudinal direction of the pack housing 200, the plurality of battery modules 100 are sealed from each other by the barrier 260, so the flow of the venting gas and/or flame in the direction of the passage hole H may be more concentrated. Accordingly, the venting gas and/or flame may be discharged to the outside of the pack housing 200 more quickly and stably.

Meanwhile, the battery pack according to the present disclosure may be applied to a vehicle such as an electric vehicle. That is, a vehicle according to the present disclosure may include one or more battery packs 10 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

On the other hand, in the present disclosure, terms indicating directions such as up, down, left, right, front, and back are used, but these terms are only for convenience of explanation, and it is obvious to those skilled in the art of the present disclosure that the terms may vary depending on the location of the target object or the location of the observer.

## Claims

1. A battery pack (10), comprising:
a battery module (100) configured to prevent venting gas or flame from being discharged to a front side of said module where a module terminal (B) is placed and
a pack housing (200) configured to accommodate the battery module (100) therein, **characterized in that** said battery module comprises an opening/closing member (C) configured to open and close a rear side of a module case (120) of the battery module (100) according to a change in the internal pressure of the module case (120) to discharge the venting gas or flame to the outside at a rear side of the module case (120).

2. The battery pack (10) according to claim 1, wherein the pack housing (200) includes a side frame (210) that constitutes a side of the pack housing (200) so that at least a part of the side frame (210) is disposed to face the rear side of the battery module (100).

3. The battery pack according to claim 2, wherein the pack housing (200) further includes a first cover (220) configured to face the opening/closing member (C) in upper and lower directions and arranged to face the side frame (210), and
wherein a passage hole (H) through which the venting gas or flame passes is formed between the side frame (210) and the first cover (220).

4. The battery pack according to claim 3, wherein an end of the opening/closing member (C) is configured to contact the first cover when thermal runaway occurs in the battery module (100).

5. The battery pack according to claim 3, wherein the pack housing (200) further includes a second cover (230) spaced apart from the first cover (220) in the upper and lower directions and placed above the first cover (220), and
wherein a flow path communicating with the passage hole (H) and configured to guide the discharge of the venting gas or flame to the outside of the pack housing (200) is formed between the first cover (220) and the second cover (230).

6. The battery pack according to claim 5, wherein the pack housing (200) further includes a discharge hole (E) communicating with the flow path and configured to discharge the venting gas or flame to the outside of the pack housing (200).

7. The battery pack according to claim 6, wherein the discharge hole (E) is located in the pack housing (200) at a position after the venting gas or flame has been bent one or more times.

8. The battery pack according to claim 7, wherein the discharge hole (E) is located at a side of the pack housing (200) opposite to a portion where the battery module (100) is placed based on the first cover (220).

9. The battery pack according to claim 8, wherein the discharge hole (E) is provided at a side of the pack housing (200) opposite to the front side of the battery module (100) based on the first cover (220).

10. The battery pack according to claim 2, wherein the pack housing (200) further includes a reinforcing wall (250) connected to the side frame (210),
wherein the battery module (100) is provided as a pair based on the reinforcing wall (250), and
wherein the pair of battery modules (100) is arranged so that the front sides of the battery modules (100) face each other within the pack housing (200).

11. The battery pack according to claim 2, wherein the pack housing (200) further includes a barrier (260) connected to the side frame (210),
wherein the battery module (100) is provided in plurality along a longitudinal direction of the pack housing (200), and
wherein the plurality of battery modules (100) are configured to be sealed to each other by the barrier (260) when viewed in the longitudinal direction of the pack housing (200).

12. A vehicle, comprising one or more battery packs (10) according to any one of claims 1 to 11.

13. A battery module, comprising:
a cell assembly (110); and
a module case (120) accommodating the cell assembly (110) therein, configured to prevent venting gas or flame from being discharged to a front side where a module terminal (B) is placed, **characterized in that** said module case has an opening/closing member configured to open and close a rear side of the module case (120) according to a change in the internal pressure of the module case (120) to discharge the venting gas or flame to the outside at a rear side.

14. The battery module according to claim 13, wherein the module case (120) is configured to be opened in an upper part at the rear side, and
wherein the opening/closing member (C) is configured to open and close the upper part of the module case (120) at the rear side according to the discharge pressure of the venting gas or the flame.

15. The battery module according to claim 14, wherein the opening/closing member (C) includes blocking plates formed at both side ends of said opening/closing member (C) in a direction perpendicular to a front-rear direction of the module case, and
wherein the blocking plates are configured to block the flow of the venting gas or the flame toward a side of the module case when the opening/closing member (C) opens the upper part of the module case (120) at the rear side.

## Patentansprüche

1. Batteriepack (10), umfassend:
ein Batteriemodul (100), welches dazu eingerichtet ist, zu verhindern, dass ein Entlüftungsgas oder eine Flamme zu einer vorderen Seite des Moduls abgegeben wird, an welcher ein Modulanschluss (B) platziert ist, und
ein Packgehäuse (200), welches dazu eingerichtet ist, das Batteriemodul (100) darin aufzunehmen,
**dadurch gekennzeichnet, dass** das Batteriemodul ein Öffnungs-/Schließelement (C) umfasst, welches dazu eingerichtet ist, eine hintere Seite eines Modulgehäuses (120) des Batteriemoduls (100) gemäß einer Änderung des Innendrucks des Modulgehäuses (120) zu öffnen und zu schließen, um das Entlüftungsgas oder die Flamme an einer hinteren Seite des Modulgehäuses (120) zu dem Äußeren abzugeben.

2. Batteriepack (10) nach Anspruch 1, wobei das Packgehäuse (200) einen seitlichen Rahmen (210) umfasst, welcher eine Seite des Packgehäuses (200) bildet, so dass wenigstens ein Teil des seitlichen Rahmens (210) derart angeordnet ist, dass er der hinteren Seite des Batteriemoduls (100) zugewandt ist.

3. Batteriepack nach Anspruch 2, wobei das Packgehäuse (200) ferner eine erste Abdeckung (220) umfasst, welche derart eingerichtet ist, dass sie in einer oberen und einer unteren Richtung dem Öffnungs-/Schließelement (C) zugewandt ist, und derart angeordnet ist, dass sie dem seitlichen Rahmen (210) zugewandt ist, und
wobei ein Durchgangsloch (H), durch welches das Entlüftungsgas oder die Flamme hindurchtritt, zwischen dem seitlichen Rahmen (210) und der ersten Abdeckung (220) gebildet ist.

4. Batteriepack nach Anspruch 3, wobei ein Ende des Öffnungs-/Schließelements (C) dazu eingerichtet ist, die erste Abdeckung zu kontaktieren, wenn in dem Batteriemodul (100) ein thermisches Durchgehen auftritt.

5. Batteriepack nach Anspruch 3, wobei das Packgehäuse (200) ferner eine zweite Abdeckung (230) umfasst, welche in der oberen und der unteren Richtung von der ersten Abdeckung (220) beabstandet ist und oberhalb der ersten Abdeckung (220) platziert ist, und
wobei ein Strömungspfad, welcher mit dem Durchgangsloch (H) in Verbindung steht und dazu eingerichtet ist, die Abgabe des Entlüftungsgases oder der Flamme zu dem Äußeren des Packgehäuses (200) zu leiten, zwischen der ersten Abdeckung (220) und der zweiten Abdeckung (230) gebildet ist.

6. Batteriepack nach Anspruch 5, wobei das Packgehäuse (200) ferner ein Abgabeloch (E) umfasst, welches mit dem Strömungspfad in Verbindung steht und dazu eingerichtet ist, das Entlüftungsgas oder die Flamme zu dem Äußeren des Packgehäuses (200) abzugeben.

7. Batteriepack nach Anspruch 6, wobei das Abgabeloch (E) in dem Packgehäuse (200) an einer Position angeordnet ist, nachdem das Entlüftungsgas oder die Flamme ein oder mehrere Male umgelenkt worden ist.

8. Batteriepack nach Anspruch 7, wobei das Abgabeloch (E) an einer Seite des Packgehäuses (200) angeordnet ist, welche auf Grundlage der ersten Abdeckung (220) einem Abschnitt entgegengesetzt ist, in welchem das Batteriemodul (100) platziert ist.

9. Batteriepack nach Anspruch 8, wobei das Abgabeloch (E) an einer Seite des Packgehäuses (200) bereitgestellt ist, welche auf Grundlage der ersten Abdeckung (220) der vorderen Seite des Batteriemoduls (100) entgegengesetzt ist.

10. Batteriepack nach Anspruch 2, wobei das Packgehäuse (200) ferner eine Verstärkungswand (250) umfasst, welche mit dem seitlichen Rahmen (210) verbunden ist,
wobei das Batteriemodul (100) auf Grundlage der Verstärkungswand (250) als ein Paar bereitgestellt ist und
wobei das Paar von Batteriemodulen (100) derart angeordnet ist, dass die vorderen Seiten der Batteriemodule (100) innerhalb des Packgehäuses (200) einander zugewandt sind.

11. Batteriepack nach Anspruch 2, wobei das Packgehäuse (200) ferner eine Barriere (260) umfasst, welche mit dem seitlichen Rahmen (210) verbunden ist,
wobei das Batteriemodul (100) entlang einer longitudinalen Richtung des Packgehäuses (200) in einer Mehrzahl bereitgestellt ist und
wobei die Mehrzahl von Batteriemodulen (100) derart eingerichtet ist, dass sie, in der longitudinalen Richtung des Packgehäuses (200) betrachtet, durch die Barriere (260) gegeneinander abgedichtet ist.

12. Fahrzeug, umfassend einen oder mehrere Batteriepacks (10) nach einem der Ansprüche 1 bis 11.

13. Batteriemodul, umfassend:
eine Zellanordnung (110); und
ein Modulgehäuse (120), welches die Zellanordnung (110) darin aufnimmt und dazu eingerichtet ist, zu verhindern, dass ein Entlüftungsgas oder eine Flamme zu einer vorderen Seite abgegeben wird, an welcher ein Modulanschluss (B) platziert ist,
**dadurch gekennzeichnet, dass** das Modulgehäuse ein Öffnungs-/Schließelement aufweist, welches dazu eingerichtet ist, eine hintere Seite des Modulgehäuses (120) gemäß einer Änderung des Innendrucks des Modulgehäuses (120) zu öffnen und zu schließen, um das Entlüftungsgas oder die Flamme an einer hinteren Seite zu dem Äußeren abzugeben.

14. Batteriemodul nach Anspruch 13, wobei das Modulgehäuse (120) derart eingerichtet ist, dass es an der hinteren Seite in einem oberen Teil geöffnet wird, und
wobei das Öffnungs-/Schließelement (C) dazu eingerichtet ist, den oberen Teil des Modulgehäuses (120) an der hinteren Seite gemäß dem Abgabedruck des Entlüftungsgases oder der Flamme zu öffnen und zu schließen.

15. Batteriemodul nach Anspruch 14, wobei das Öffnungs-/Schließelement (C) Sperrplatten umfasst, welche in einer zu einer Vorne-Hinten-Richtung des Modulgehäuses senkrechten Richtung an beiden seitlichen Enden des Öffnungs-/Schließelements (C) gebildet sind, und
wobei die Sperrplatten dazu eingerichtet sind, die Strömung des Entlüftungsgases oder der Flamme in Richtung einer Seite des Modulgehäuses zu blockieren, wenn das Öffnungs-/Schließelement (C) den oberen Teil des Modulgehäuses (120) an der hinteren Seite öffnet.

## Revendications

1. Bloc-batterie (10), comprenant :
un module de batterie (100) configuré pour empêcher un gaz de ventilation ou une flamme d'être évacué(e) vers un côté avant dudit module où est placée une borne de module (B) et
un boîtier du bloc (200) configuré pour abriter le module de batterie (100) à l'intérieur de celui-ci, **caractérisé en ce que** ledit module de batterie comprend un organe d'ouverture/fermeture (C) configuré pour ouvrir et fermer un côté arrière d'un carter de module (120) du module de batterie (100) conformément à un changement de la pression interne du carter de module (120) afin d'évacuer le gaz de ventilation ou la flamme vers l'extérieur au niveau d'un côté arrière du carter de module (120).

2. Bloc-batterie (10) selon la revendication 1, dans lequel le boîtier du bloc (200) comporte un cadre latéral (210) qui constitue un côté du boîtier du bloc (200) de sorte qu'au moins une partie du cadre latéral (210) est disposée pour faire face au côté arrière du module de batterie (100).

3. Bloc-batterie selon la revendication 2, dans lequel le boîtier du bloc (200) comporte en outre un premier couvercle (220) configuré pour faire face à l'organe d'ouverture/fermeture (C) dans des directions supérieure et inférieure et agencé pour faire face au cadre latéral (210), et
dans lequel un trou de passage (H) à travers lequel passe le gaz de ventilation ou la flamme est formé entre le cadre latéral (210) et le premier couvercle (220).

4. Bloc-batterie selon la revendication 3, dans lequel une extrémité de l'organe d'ouverture/fermeture (C) est configurée pour entrer en contact avec le premier couvercle lorsqu'un emballement thermique se produit dans le module de batterie (100).

5. Bloc-batterie selon la revendication 3, dans lequel le boîtier du bloc (200) comporte en outre un second couvercle (230) espacé du premier couvercle (220) dans les directions supérieure et inférieure et placé au-dessus du premier couvercle (220), et
dans lequel un trajet d'écoulement communiquant avec le trou de passage (H) et configuré pour guider l'évacuation du gaz de ventilation ou de la flamme vers l'extérieur du boîtier du bloc (200) est formé entre le premier couvercle (220) et le second couvercle (230).

6. Bloc-batterie selon la revendication 5, dans lequel le boîtier du bloc (200) comporte en outre un trou d'évacuation (E) communiquant avec le trajet d'écoulement et configuré pour évacuer le gaz de ventilation ou la flamme vers l'extérieur du boîtier du bloc (200).

7. Bloc-batterie selon la revendication 6, dans lequel le trou d'évacuation (E) est situé dans le boîtier du bloc (200) à une position après que le gaz de ventilation ou la flamme a été incurvé(e) une ou plusieurs fois.

8. Bloc-batterie selon la revendication 7, dans lequel le trou d'évacuation (E) est situé sur un côté du boîtier du bloc (200) opposé à une portion où le module de batterie (100) est placé sur la base du premier couvercle (220).

9. Bloc-batterie selon la revendication 8, dans lequel le trou d'évacuation (E) est agencé sur un côté du boîtier du bloc (200) opposé au côté avant du module de batterie (100) sur la base du premier couvercle (220).

10. Bloc-batterie selon la revendication 2, dans lequel le boîtier du bloc (200) comporte en outre une paroi de renfort (250) reliée au cadre latéral (210),
dans lequel le module de batterie (100) est prévu sous la forme d'une paire basée sur la paroi de renfort (250), et
dans lequel la paire de modules de batterie (100) est agencée de sorte que les côtés avant des modules de batterie (100) se font face l'un l'autre à l'intérieur du boîtier du bloc (200).

11. Bloc-batterie selon la revendication 2, dans lequel le boîtier du bloc (200) comporte en outre une barrière (260) reliée au cadre latéral (210),
dans lequel le module de batterie (100) est prévu en pluralité le long d'une direction longitudinale du boîtier du bloc (200), et
dans lequel la pluralité de modules de batterie (100) sont configurés pour être scellés les uns aux autres par la barrière (260) lorsqu'observé dans la direction longitudinale du boîtier du bloc (200).

12. Véhicule, comprenant un ou plusieurs blocs-batteries (10) selon l'une quelconque des revendications 1 à 11.

13. Module de batterie, comprenant :
un ensemble de cellules (110) ; et
un carter de module (120) abritant l'ensemble de cellules (110) à l'intérieur de celui-ci, configuré pour empêcher un gaz de ventilation ou un flamme d'être évacué(e) vers un côté avant où est placée une borne de module (B), **caractérisé en ce que** ledit carter de module a un organe d'ouverture/fermeture configuré pour ouvrir et fermer un côté arrière du carter de module (120) conformément à un changement de la pression interne du carter de module (120) afin d'évacuer le gaz de ventilation ou la flamme vers l'extérieur au niveau d'un côté arrière.

14. Module de batterie selon la revendication 13, dans lequel le carter de module (120) est configuré pour s'ouvrir dans une partie supérieure au niveau du côté arrière, et
dans lequel l'organe d'ouverture/fermeture (C) est configuré pour ouvrir et fermer la partie supérieure du carter de module (120) au niveau du côté arrière en fonction de la pression d'évacuation du gaz de ventilation ou de la flamme.

15. Module de batterie selon la revendication 14, dans lequel l'organe d'ouverture/fermeture (C) comporte des plaques de blocage formées au niveau de deux extrémités latérales dudit organe d'ouverture/fermeture (C) dans une direction perpendiculaire à une direction avant-arrière du carter de module, et
dans lequel les plaques de blocage sont configurées pour bloquer l'écoulement du gaz de ventilation ou de la flamme vers un côté du carter de module lorsque l'organe d'ouverture/fermeture (C) ouvre la partie supérieure du carter de module (120) au niveau du côté arrière.
